# EUROPEAN PATENT APPLICATION

(11) **EP 1 884 535 A1**
(43) Date of publication of application: **06.02.2008**
(21) Application number: 07253005.8
(22) Date of filing: 31.07.2007
(51) Int. Cl.: C08J 7/12, A61J 1/05, C08L 67/02

(54) **Medical containers and treating method for producing medical containers**

(30) Priority: 31.07.2006 JP 2006209231
(71) Applicant: DAIKYO SEIKO, LTD., Tokyo 131-0031 (JP)
(72) Inventor: Kuroda, Shin-ichi, Kiryu-shi, Gunma 3760052 (JP); Ikeda, Masaru, Daikyo Seiko, Ltd., Sumida-ku, Tokyo 1310031 (JP)
(74) Representative: Goddard, Christopher Robert

(57) **Abstract**

A medical container is excellent in solvent resistance, low gas permeability and heat resistance. A treating method for producing such medical containers is also disclosed.

The medical container includes a polyethylene naphthalate resin and includes a liquid-contact part which is on an inner surface of the container, the liquid-contact part being resistant to leaching of a component of the container as a result of being irradiated with light and/or plasma. The light for irradiation may have a wavelength in the range of 350 to 450 nm. The medical container may be a vial or a syringe. The treating method for producing a medical container includes irradiating a liquid-contact part of a polyethylene naphthalate medical container with light and/or plasma.

## Description

### FIELD OF THE INVENTION

The present invention relates to medical containers and a treating method for producing the medical containers.

More particularly, the invention relates to medical containers excellent in solvent resistance, low gas permeability and heat resistance, and to a treating method for producing such containers.

### BACKGROUND OF THE INVENTION

Glass medical containers are conventional. When a medical agent is stored in the glass container, it will finally contain the alkali ions (Na⁺) released from the container, or fine matters called flakes. Opaque glass containers include a coloring metal, which can be leached during storage and contaminate the contents such as medical agents and foods.

Moreover, glass ampules cause another problem in opening. Recent ampules frequently have an easy cut system which requires no special tools for opening. However, like the usual ampules, these easy-to-cut ampules show a sharp and dangerous cut end and produce glass dusts when they are opened. The danger of contamination of medical agents with the glass dusts has been pointed out. Moreover, some medical agents show higher adsorption of their components to the glass containers than to plastic containers.

In order to avoid these problems, the glass containers are more frequently replaced by plastic containers.

The plastics are more lightweight than glass. Some plastics, however, are inferior in molding properties, strength of shaped articles, gas impermeability and vapor impermeability.

The present applicant has proposed medical containers improved in these properties (JP-A-2004-323058), wherein the medical containers are produced by providing a gas-barrier DLC (Diamond like carbon) layer on a cyclic olefin polymer surface.

Meanwhile, the industry in recent years has required new containers improved in safety, handling, gas barrier properties and chemical resistance.

The present inventors have studied diligently focusing on polyethylene naphthalate which has been difficult to be used in medical containers.

The polyethylene naphthalate (PEN) possesses excellent properties such as solvent resistance, low gas permeability and heat resistance and is expected to be used in medical containers. In particular, its low gas permeability is far superior to that of other plastics. Unlike other polyesters, the polyethylene naphthalate is hardly hydrolyzed under usual temperature conditions, and its hydrolysis resistance is higher than PET having a similar structure. However, the polyethylene naphthalate is hydrolyzed with hot vapor. When PEN medical containers are subjected to high-pressure steam sterilization, the polymer is partially hydrolyzed and low-molecular weight components leak out of the containers are often released in the medical agent. Accordingly, the conventional PEN medical containers have been unable to satisfy the specification values of released content in a dissolution test specified in the Japanese Pharmacopoeia.

JP-A-H11-217427 discloses the use of polyethylene naphthalate in beverage bottles. However, direct application of such beverage containers to medical containers is difficult considering characteristics of medical agents to be contained therein and leaching of impurities.

JP-A-2001-301731 addresses gas barrier properties and prevention of leaching of low-molecular weight components. A container disclosed therein is composed of a lamination of two or more resin layers, wherein one of the resin layers is a polyethylene naphthalate layer and an inorganic compound is deposited on the inner surface of the polyethylene naphthalate layer by plasma CVD. JP-A-2002-177364 discloses a polyethylene naphthalate container for medical agents, in which a parylene layer covers at least part of the surface which will be contacted with a medical agent. JP-A-2006-117269 discloses that the entire inner surface of a polyester container is covered with a thin layer based on an inorganic oxide or a hard carbon thin layer.

As disclosed in these documents, leaching of components is conventionally prevented by providing a deposit layer or a thin layer. However, formation of such layers can cause contamination, nonuniformity and complicated steps. Accordingly, there has been a demand for containers which are improved in safety, handling, gas barrier properties and chemical resistance and to which components in the medical agent show less adsorption. In particular, medical containers are required not to be hydrolyzed and not to release low-molecular weight components at high temperatures. When inorganic layers such as of silicon oxide, titanium oxide and aluminum oxide are provided as inner layers contacted with the medical agents, as the medical agents will adsorb thereto or the metals will be leached therefrom, it is difficult to use for a medical container.

The present inventors have made extensive and intensive studies to solve the problems as described above. They have found that by specially treating a liquid-contact part of a polyethylene naphthalate medical container that is brought into contact with a medical agent, the medical container achieves a drastically improved leaching resistance without a separate layer. The present invention has been completed based on the finding.

A medical container according to the present invention comprises a polyethylene naphthalate resin and includes a liquid-contact part which is on an inner surface of the container, the liquid-contact part being resistant to leaching of a component of the container as a result of being irradiated with light and/or plasma. As used herein, being resistant to leaching (leaching resistance) means that leaching of a low-molecular weight component is unlikely.

The light for irradiation preferably has a wavelength in the range of 350 to 450 nm.

The medical container is preferably a vial or a syringe.

A treating method for producing a medical container according to the present invention comprises irradiating a liquid-contact part of a polyethylene naphthalate medical container with light and/or plasma.

In the treating method, the light preferably has a wavelength in the range of 350 to 450 nm.

As used herein, the term "low molecular weight components" relates to components having a molecular weight of less than 5000 amu, preferably less than 1000 amu, especially less than 250 amu. Generally the low molecular weight components will be monomers, such as ethylene glycol and/or naphthalene dicarboxylic acid monomers, and/or oligomers thereof in the above molecular weight ranges.

JP-A-H05-295655 discloses that a polyester is irradiated with a UV pulse laser. This irradiation is aimed at decomposing polyester molecular chains for UV shielding, and does not at all teach that gas barrier properties and solvent resistance are increased thereby. Moreover, this document does not mention use and characteristics of the polyethylene naphthalate.

In the invention, a crosslinked structure or layer thereof is produced in the surface of a liquid-contact part of a polyethylene naphthalate medical container, whereby the leaching of a PEN component is prevented. The medical container obtained has high gas barrier properties inherent to the polyethylene naphthalate. Moreover, the medical container is superior in chemical resistance to conventional cyclic polyolefin medical containers, and medical agents show less adsorption to the medical container than to glass containers.

### BRIEF DESCRIPTION OF THE DRAWINGS

Fig. 1 is a schematic view showing an apparatus used in the light treatment in an embodiment of the invention;
Fig. 2 is a schematic view showing a plasma generator used in the plasma treatment in an embodiment of the invention;
Fig. 3 is a schematic view showing an apparatus used in the light treatment in another embodiment of the invention; and
Fig. 4 is a schematic view showing a plasma generator used in the plasma treatment in another embodiment of the invention.

### PREFERRED EMBODIMENTS OF THE INVENTION

Preferred embodiments of the present invention will be described below.

The invention uses a polyethylene naphthalate.

The polyethylene naphthalate is a polycondensate of naphthalene dicarboxylic acid and ethylene glycol. The polyethylene naphthalate may be conventional.

The polyethylene naphthalate may be a homopolymer of ethylene-2,6-naphthalene dicarboxylate or copolymer containing other components. Part (less than 30 mol%) of the 2,6-naphthalene dicarboxylic acid may be substituted with other bifunctional carboxylic acids such as aromatic dicarboxylic acids such as naphthalene dicarboxylic acid isomers (e.g., 2,7-, 1,5- and 1,7-naphthalene dicarboxylic acids), terephthalic acid, isophthalic acid, diphenyldicarboxylic acids, diphenoxyethanedicarboxylic acids, diphenyl ether dicarboxylic acids and diphenylsulfonedicarboxylic acids; alicyclic dicarboxylic acids such as hexahydroterephthalic acids and hexahydroisophthalic acids; aliphatic dicarboxylic acids such as adipic acid, sebacic acid, azelaic acid and 2,6-decalindicarboxylic acid; and oxy acids such as p-β-hydroxyethoxybenzoic acid and ε-oxycaproic acid.

Part (less than 30 mol%) of the ethylene glycol may be substituted with one or more polyfunctional compounds such as trimethylene glycol, tetramethylene glycol, hexamethylene glycol, decamethylene glycol, neopentyl glycol, diethylene glycol, 1,1-cyclohexanedimethanol, 1,4-cyclohexanedimethanol, 2,2-bis(4'-β-hydroxyethoxyphenyl)propane and bis(4'-β-hydroxyethoxyphenyl)sulfonic acid.

The polymer used in the invention may be mixed or alloyed with other plastics or rubbery polymers as long as the obtainable container has a desired performance. Examples of the plastics include polyethylenes, polypropylenes, cyclic polyolefins, nylons, polyethylene terephthalates, polybutylene terephthalates and ethylene/acrylic acid copolymers. Examples of the rubbery polymers include isoprene rubbers, butadiene rubbers, butadiene/isoprene copolymer rubbers, ethylene/propylene copolymer rubbers, ethylene/propylene terpolymers, butyl rubbers and brominated butyl rubbers.

In the invention, commercially available polyethylene naphthalates may be used without limitation. Additives may be used as required.

The polymer preferably has a weight-average molecular weight of not less than 10,000, and a softening point (ASTM D1525) of not less than 120°C.

A medical container to be treated according to the invention may be fabricated as follows. The polyethylene naphthalate is combined with additives such as plastics, anti-aging agents and processing aids as required. These components are mixed with a known mixer such as an internal mixer, a kneader, a roll mill, a Banbury mixer or an extruder. The resultant mixture (composition) is molded into a desired form by injection molding, extrusion or compression molding (sheet forming, blow molding). The shapes of the containers are not particularly limited, and the containers may be ampules, vial containers, vials and syringes. In the invention, a cap is considered to be part of the medical container. The cap may be composed of the same or different material from the container. Furthermore, the container and the cap may be integrated together. The size of the container is not limited. In the invention, vials and syringes are preferable.

The thickness of the container may be variable depending on the application and size, and is suitably in the range of about 0.5 to 20 mm. The thickness may be uniform or varied within the container. A gas barrier layer or a light-shielding layer may be provided on the outer surface (which may not be treated in the invention) of the container, for enabling long-term stable storage. Such layers may be produced by methods described in JP-A-2004-323058 filed by the present applicant.

When the liquid-contact part treated according to the present invention is tested by a dissolution test specified in the Japanese Pharmacopoeia, the liquid contained in the container shows a lower UV absorbance than when the liquid-contact part is not treated according to the invention. Preferably, the UV absorbance at wavelengths from 220 to 240 nm is not more than 0.08 and that at wavelengths from 241 to 340 nm is not more than 0.05.

The liquid-contact part refers to a part which is brought into direct contact with the content (medical agent). The outer surface which is not brought into contact with the content may fail to satisfy the above dissolution test. It is generally more desirable in view of gas barrier properties that the whole of the container satisfies the dissolution test.

The dissolution test is specified in the Japanese Pharmacopoeia as follows. A flat polyethylene naphthalate sample having a thickness of 1 mm and a surface area of 600 cm² is cut into pieces about 5 cm in length and 0.5 cm in width. The test pieces are then washed with water and dried at room temperature. The test pieces are placed in a 300 ml beaker, 200 ml of distilled water is added, and the beaker is covered with an aluminum foil. The test pieces are sterilized in an autoclave at 121°C for 1 hour. The test liquid thus obtained is placed in a quartz cell with a length of 1 cm and is analyzed on an ultraviolet-visible spectrophotometer to determine the absorbance at 220 to 340 nm. The amount of leached-out component is evaluated based on the absorbance. The absorbance standards for medical containers are not more than 0.08 at 220 to 240 nm and not more than 0.05 at 241 to 340 nm.

The less the amount of leached-out component, the higher the hydrolysis resistance. The dissolution test of an untreated polyethylene naphthalate results in an absorbance of more than 0.05 at 241 nm, which limits applications as medical containers.

In the present invention, the liquid-contact part is resistant to leaching of a component of the container as a result of being irradiated with light and/or plasma.

The light may have a wavelength of 200 to 800 nm, preferably 350 to 450 nm. The light having this wavelength provides the objective leaching resistance as described above. The light intensity and irradiation time may be determined appropriately depending on the size and thickness of the container and the amount of a component leached from the container. However, too long irradiation deteriorates the transparency and reduces the strength of the container.

The irradiation temperature is not specifically limited as long as the resin is not molten or denatured, and may be usually in the range of about 100 to 200°C (e.g. 130 to 150°C).

The reason for light irradiation being capable of providing the leaching resistance is unknown. Usually molecular chains in general are crosslinked and are broken at the same time by light irradiation as described in Polymer Degradation and Stability 56 (1997), pp. 339-350 and Functional Materials, October Issue (1991), vol. 11, No. 10, pp. 5-16. In contrast, the leaching resistance of polyethylene naphthalate is probably enabled by characteristics that the polyethylene naphthalate is preferentially crosslinked when irradiated with light.

The liquid-contact part may be treated by plasma irradiation. The plasma may be generated using inert and chemically unreactive gases such as He and Ar, and gases which are not polymerized but participate in chemical reactions with examples including H₂, O₂, N₂, H₂O, NH₃ and CF₄. Of these gases, Ar and H₂ are preferable. The plasma irradiation provides the leaching resistance similarly to the light irradiation.

The plasma irradiation conditions may be conventional. Specifically, commercial frequencies from direct current plasma to about 1 kHz, and frequencies such as 13.56 MHz, 27.12 MHz, 40.68 MHz, 2.45 GHz, 5.8 GHz and 22.125 GHz may be used.

The plasma probably modifies the surface of polyethylene naphthalate to prevent the polymer from being hydrolyzed, as described in Journal of Applied Polymer Science 42, 97 (1988), pp. 97-124 and Low-Temperature Plasma Material Chemistry, pp. 191-197 (published by Sangyo-tosho, first edition, March 18, 1994). Although the mechanism of this effect is unclear, the polymer molecules on the surface will form radicals in an inert gas plasma and the radicals will be reacted with neighbor molecules to produce a crosslinked structure and finally a dense three-dimensional structure, providing an increased hydrolysis resistance against hot vapor.

The treating method for producing a medical container according to the present invention comprises irradiating a liquid-contact part of a polyethylene naphthalate medical container with light and/or plasma. As a result of the irradiation, the medical container achieves higher hydrolysis resistance against hot vapor.

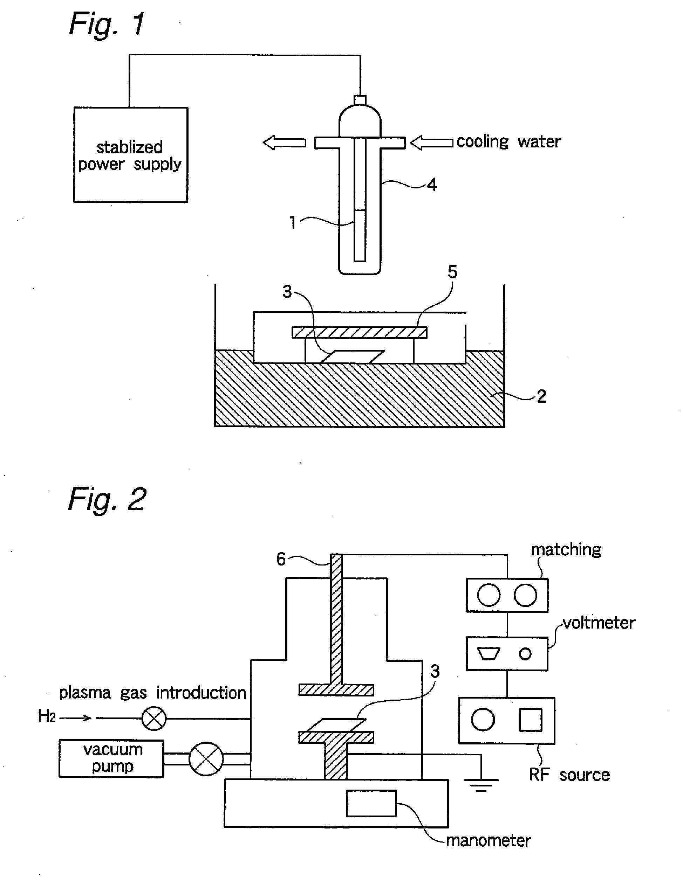

The treating method may use any apparatuses capable of irradiating the liquid-contact part with light and/or plasma without particular limitation. For example, apparatuses shown in Figs. 1 and 2 may be employed.

Fig. 1 is a schematic view showing an apparatus used in the light treatment in an embodiment of the invention. A light source 1 emits light of desired wavelength to a sample (medical container) 3 kept at a constant temperature by heating means 2 such as an oil bath. The treatment temperature is desirably in the range of 100 to 200°C, preferably 130 to 150°C.

The light source may be a conventional one such as a high-pressure mercury lamp. A water-cooled condenser tube 4 may be attached to the lamp as required. Where required, a cut filter 5 may be provided between the light source 1 and the sample 3 to control the wavelength.

Fig. 2 is a schematic view showing a plasma generator. The sample 3 is placed in the apparatus in vacuo, and a voltage is applied from an external power source to an electrode 6. A plasma gas (hydrogen gas, non-polymerizable gas (e.g., Ar, N₂, O₂), polymerizable gas (e.g., monomer such as CH₄, or a mixture of these gases) is introduced from an external source in the apparatus to generate a plasma. The output of the power source is not particularly limited but is desirably in the range of 10 to 200 W. The plasma irradiation time may be determined appropriately. The pressure during the plasma irradiation is generally in the range of 0.5 to 100 Pa.

By these treatments, the polyethylene naphthalate resin achieves hydrolysis resistance against hot vapor without any separate layers.

The light and/or plasma should be applied at least to the liquid-contact part. This selective treatment may be performed without limitation. For example, a part other than the liquid-contact part may be masked. Alternatively, the whole container may be treated.

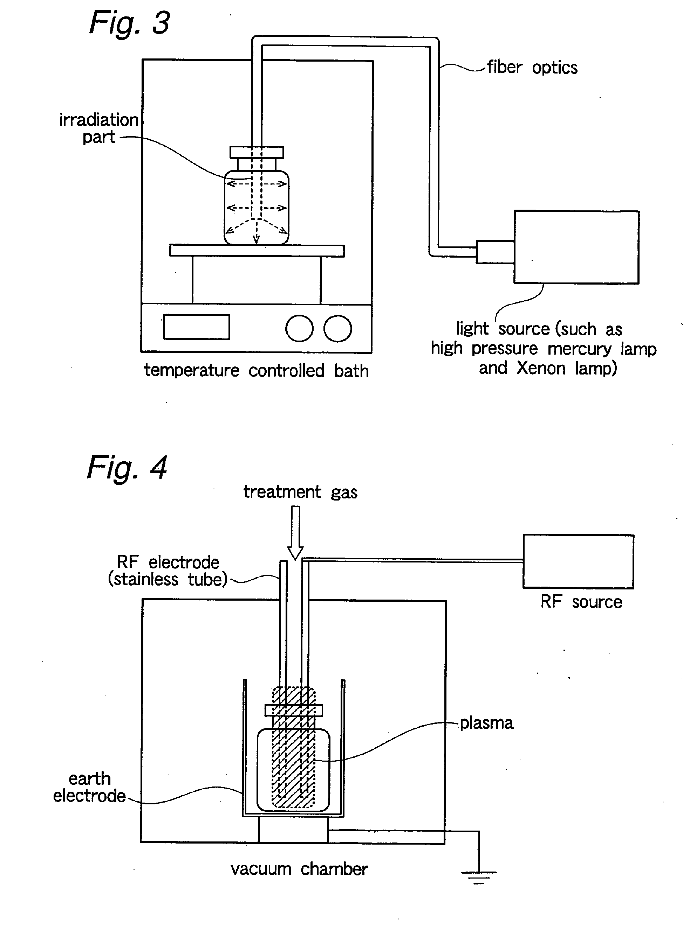

For example, an apparatus as shown in Fig. 3 may be used to irradiate the inside of the container with light. Light from a light source passes through an optical fiber to the inside of the container. The end portion of the fiber is like a lens to distribute the light to the entire inner surface. Desirably, the sample (container) is placed in a thermostatic chamber at a high temperature (room temperature to 180°C) to increase the reaction rate. A plurality of containers may be treated simultaneously with use of a plurality of optical fibers. The system may be isolated from the outside environment using an air shower or a pass box to maintain the temperature and the atmosphere in the system.

An apparatus shown in Fig. 4 may be utilized to apply a plasma to the inside of the container. An RF (radio frequency) electrode for generating a plasma may be a tube such as stainless steel (suitably not more than 1 mm in inner diameter). An earth electrode is provided surrounding the sample. A treatment gas (hydrogen gas, non-polymerizable gas (e.g., Ar, N₂, O₂), polymerizable gas (e.g., monomer such as CH₄, or a mixture of these gases) is fed through the RF electrode. A voltage is applied to the RF electrode to generate a plasma inside the container, and the plasma reforms the container surface. The pressure may be subatmospheric or atmospheric.

The treatments described above increase the hydrolysis resistance and reduce the leaching of monomers from the container to the medical agent contained in the container.

### EXAMPLES

The present invention will be described by Examples below without limiting the scope of the invention.

### Examples 1-3

### Light irradiation with high-pressure mercury lamp

A light irradiation apparatus shown in Fig. 1 was used.

A light source was a high-pressure mercury lamp equipped with a water-cooled condenser tube. During irradiation with light, a sample was heated over an oil bath at 130°C, 140°C or 150°C.

The sample was a 1 mm thick plate prepared from polyethylene naphthalate pellets (TEIJIN CHEMICALS LTD., TEONEX TN8065s). The sample was placed on a table below the light source, and a 390 nm cut filter was placed above the sample to adjust the wavelength. Both surfaces of the sample were each irradiated with light for 60 minutes.

The sample was subjected to a dissolution test as described below.

### Dissolution test

The sample was tested in accordance with a general test procedure of dissolution test specified in the Japanese Pharmacopoeia. Pieces of the sample treated as described above were collected so that the total surface area was 600 cm². The pieces were washed with water and dried at room temperature. The test pieces were placed in a 300 ml beaker, 200 ml of distilled water was added, and the beaker was covered with an aluminum foil. The test pieces were sterilized in an autoclave at 121°C for 1 hour. The test liquid thus obtained was analyzed to obtain a UV absorption spectrum. The leaching resistance was evaluated based on a maximum absorbance.

The results are given in Table 1.

The temperature during the irradiation was 150°C in Example 1, 140°C in Example 2, and 130°C in Example 3. An untreated sample was measured for absorbance in Comparative Example.

The absorbance of the test liquid decreased as the treatment temperature was higher, indicating higher hydrolysis resistance.

### Example 4

A surface of polyethylene naphthalate was treated using a plasma generator shown in Fig. 2. The sample used was the same as that used in Examples 1 to 3. Hydrogen was used as the plasma gas, and the pressure was 20 Pa. An output voltage of 150 W was applied from an RF power source. The sample was plasma treated for 10 minutes.

A dissolution test was performed as described in Examples 1 to 3. The hydrolysis resistance was evaluated based on a maximum absorbance. The results are given in Table 1. The absorbance of the test liquid was lower than that in Comparative Example, indicating prevention of leaching of the monomer by the plasma treatment.

**Table 1**

| | Treatment | Temperature | Absorbance of test liquid |
|---|---|---|---|
| Ex. 1 | Light irradiation | 150°C | 0.07 |
| Ex. 2 | Light irradiation | 140°C | 0.10 |
| Ex. 3 | Light irradiation | 130°C | 0.11 |
| Ex. 4 | Plasma treatment | - | 0.09 |
| Comp. Ex. | No treatment | - | 0.13 |

## Claims

1. A medical container comprising a polyethylene naphthalate resin and including a liquid-contact part which is on an inner surface of the container, the liquid-contact part being resistant to leaching of a component of the container, said resistance being a result of being irradiated with light and/or plasma.

2. The medical container according to claim 1, wherein said resistance to leaching of a component comprises resistance to leaching of low-molecular weight components of said container.

3. The medical container according to claims 1 or 2, wherein said leaching-resistance is **characterised by** an aqueous liquid contained in said container showing a lower UV absorbance than an equivalent liquid contained in an otherwise identical container which is not treated by irradiation with light or plasma, when tested according to the Japanese Pharmacopoeia Dissolution Test.

4. The medical container of claim 3, wherein testing of said container according to the Japanese Pharmacopoeia Dissolution Test results in a liquid having a UV absorbance for a 1 cm path length of not more than 0.08 at wavelengths of 220 to 240 nm and a UV absorbance for a 1 cm path length of not more than 0.05 at wavelengths of 241 to 340 nm.

5. The medical container according to claims 1 to 4, wherein the light for irradiation has a wavelength in the range of 350 to 450 nm.

6. The medical container according to claims 1 to 6, which is a vial or a syringe.

7. A treating method for producing a medical container, comprising irradiating a liquid-contact part of a polyethylene naphthalate medical container with light and/or plasma.

8. The treating method according to claim 7, wherein the light has a wavelength in the range of 350 to 450 nm.

9. Use of a container according to claims 1 to 6 in storage of a medical agent.

10. Use of irradiation with light and/or plasma in reducing leaching from a liquid-contact part which is on an inner surface of a container comprising a polyethylene naphthalate resin.
